# EUROPEAN PATENT SPECIFICATION

(11) **EP 1 083 726 B1**
(45) Date of publication and mention of the grant of the patent: **30.03.2005**
(21) Application number: 00119293.9
(22) Date of filing: 06.09.2000
(51) Int. Cl.: H04M 1/2745

(54) **Telephone apparatus, automatic route selecting method therefor and automatic dialing-transmitting method therefor**
Telefongerät und Verfahren zur automatischen Routen-Auswahl und zur automatischen Übertragung der Rufnummer
Appareil téléphonique et méthodes de sélection automatique de route et de transmission automatique du numéro

(30) Priority: 07.09.1999 JP 25240799
(43) Date of publication of application: 14.03.2001
(73) Proprietor: Matsushita Electric Industrial Co., Ltd., Kadoma-shi, Osaka 571-8501 (JP)
(72) Inventor: Inoue, Akihiro, Chikushino-shi, Fukuoka 818-0036 (JP)
(74) Representative: Grünecker, Kinkeldey, Stockmair & Schwanhäusser Anwaltssozietät

(56) References cited:
- WO-A-99/30470
- DE-A- 19 800 906
- DE-A- 19 806 942
- DE-U- 29 904 819
- US-A- 5 161 184
- US-A- 5 638 433

## Description

### FIELD OF THE INVENTION

The present invention relates to an automatic route selecting method and an automatic dialing-transmitting method for use with a telephone apparatus such as a telephone, a facsimile or the like, for selecting a line of a telephone company from among lines of plural telephone companies and performing transmission, and also relates to a telephone apparatus provided with an automatic route selecting function or an automatic dialing-transmitting function.

### BACKGROUND OF THE INVENTION

A telephone apparatus such as a telephone, a facsimile or the like generally has an automatic routing function which, in accordance with a procedure preset, selects a line of a telephone company providing the least expensive telephone rate from among lines of plural telephone companies and performs transmission. A procedure for setting this function is transmitted from a telephone company over a telephone line. As the alternative to the sending of the setting procedure over the telephone line, a contract telephone company installs a transmitter which prefixes a dial code of the contract telephone company to each telephone number.

However, when there is a change in the telephone rate of each telephone company, such information is not always sent to the telephone apparatus at once. Moreover, plural telephone companies provide various services, which situation causes emergence of telephone companies whose telephone rates are more inexpensive. Accordingly, it is not easy and convenient for a user employing the telephone apparatus, for example, to change setting of the telephone apparatus such that the apparatus is adaptable to the user's desired service newly provided by a different telephone company, or to make changes in the transmitter which prefixes the dial code to a telephone number.

Prior art references US 5, 638 433 and DE 198 00 906 A1, both describe methods and systems to associate a prefix for selecting a telephone company to an area code for least cost routing. The prefix is obtained from external database sources.

WO 99/30470 describes a telephone with an internal telephone book in which the area codes are associated with prefixes entered by the user. The object of the invention is to provide for a user friendly assistance to update the internal telephone book by associating the necessary prefixes to all frequently used area codes.

This object is solved by claims 1 (method) and 4 (apparatus). Preferred embodiments are referred to in the sub-claims.

### BRIEF DESCRIPTION OF THE DRAWINGS

FIG. 1 is a block diagram illustrating a principal part of a telephone apparatus using an automatic route selecting method in accordance with a first exemplary embodiment of the present invention;
FIG. 2 shows a flow chart illustrating an automatic route setting procedure in the automatic route selecting method for setting a telephone company and an area code, and a flow chart illustrating dialing-transmission;
FIG. 3 illustrates a storing style of the automatic route setting table where a dial code of the telephone company, the area code and the largest number of digits of the input area code are set; and
FIG. 4 shows a flow chart illustrating a registration procedure of a telephone directory in the automatic route selecting method and a flow chart illustrating dialing-transmission utilizing the telephone directory.

### DESCRIPTION OF THE PREFERRED EMBODIMENTS

Exemplary embodiments of the present invention are hereinafter explained with the drawings.

### (First Exemplary Embodiment)

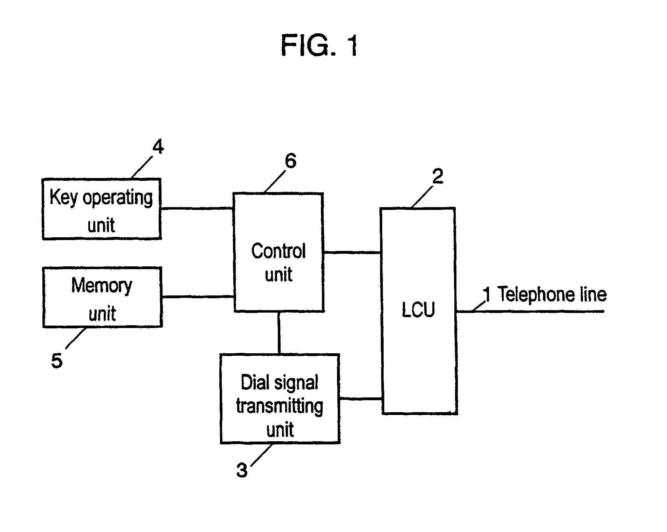

As shown in FIG. 1, a structure of a telephone apparatus using an automatic route selecting method in accordance with a first exemplary embodiment of the present invention is as follows.

Line control unit (hereinafter referred to simply as "LCU") 2 is connected to telephone line 1. Dial signal transmitting unit 3 transmits dial data to telephone line 1 connected to LCU 2. Using key operating unit 4, a user inputs a telephone number, an area code and a dial code of a telephone company. Memory unit 5 stores the area code and the dial code of the telephone company input from key operating unit 4. Control unit 6 judges whether an area code input and dialed coincides with the area code stored in memory unit 5. When control unit 6 judges that there is a coincidence, it automatically prefixes the dial code of the telephone company stored in memory unit 5 to a telephone number to be called.

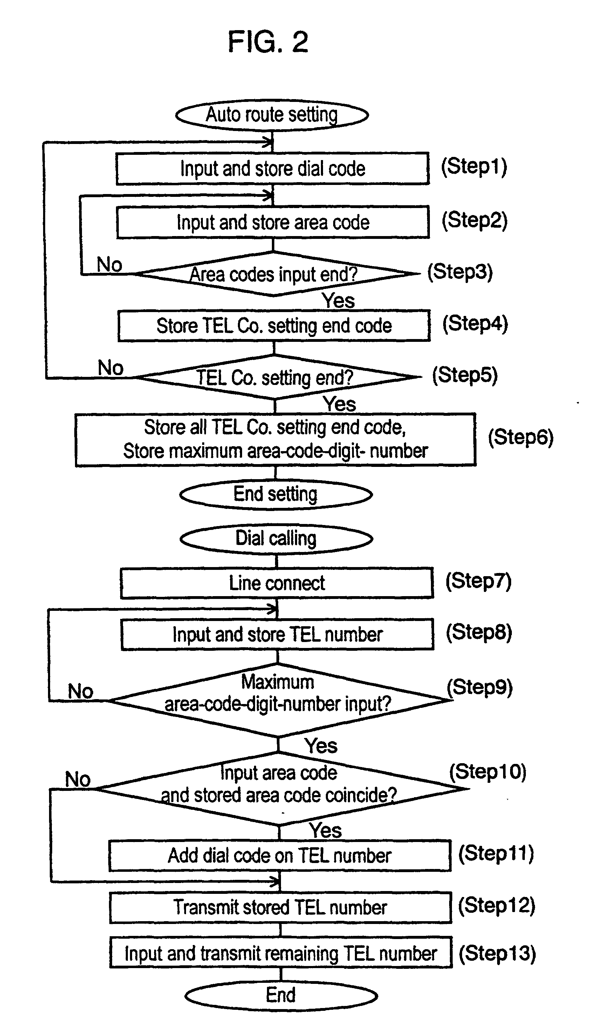

An operation of the telephone apparatus as configured above using the automatic route selecting method in accordance with the first exemplary embodiment of the present invention is explained next with a flow chart of FIG. 2.

An automatic route setting procedure for setting a telephone company and an area code is explained first.
Step 1: A dial code of a telephone company is input from key operating unit 4 and stored in an automatic route setting table in memory unit 5.
Step 2: An area code or area codes to be called through the telephone company are input from key operating unit 4 and stored in the automatic route setting table of memory unit 5.
Step 3: The telephone apparatus judges whether a key-in indicative of an end of inputting of all of the area codes is performed from key operating unit 4.
Step 4: When it is judged that inputting of all of the area codes is completed, a code indicative of an end of setting of the telephone company is stored in the automatic route setting table of memory unit 5.

When it is judged that the inputting of all of the area codes is not completed, the procedure is performed again from step 2.
Step 5: Whether a key-in indicative of an end of inputting of all of the telephone companies is performed from key operating unit 4 is judged.
Step 6: When it is judged that setting of all of the telephone companies is completed and when the user is under contracts to all of the thus-set telephone companies, a code indicative of an end of the setting of all of the telephone companies and the largest number of digits of the input area codes are stored in the automatic route setting table of memory unit 5.

When it is judged that the setting of all of the telephone companies is not completed, the procedure is performed again from step 1.

An explanation of dialing-transmission is given next.
Step 7: When a line connection command is input from key operating unit 4, LCU 2 connects with telephone line 1.
Step 8: A telephone number to be dialed is input one digit by one digit from key operating unit 4 and stored in memory unit 5.
Step 9: A telephone number is input until the largest number of digits of the area codes in the automatic route setting table is input.
Step 10: Control unit 6 judges whether an area code of the telephone number input in step 8 coincides with one of the stored area codes in the automatic route setting table.
Step 11: When control unit 6 judges in step 10 that there is a coincidence, it prefixes the dial code of the corresponding telephone company to the telephone number stored in step 8 and stores the telephone number prefixed with the dial code in memory unit 5.
Step 12: The telephone number prefixed with the dial code stored in memory unit 5 in step 11 is transmitted from dial signal transmitting unit 3 to telephone line 1.
Step 13: The remaining parts of the telephone number (i.e., the local number) is input and transmitted from dial signal transmitting unit 3 to telephone line 1.

When control unit 6 judges in step 10 that there is no coincidence, step 12 and step 13 are performed.

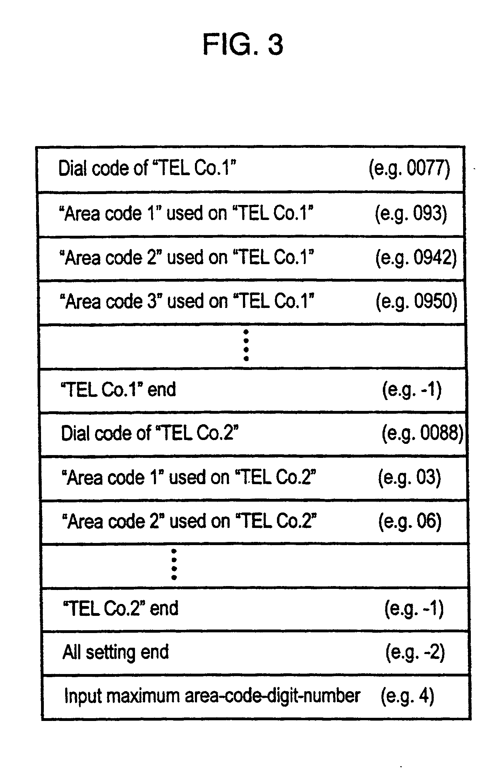

In FIG. 3, there is shown a storing format of the automatic route setting table where a dial code of a telephone company, an area code and the largest number of digits of the area code are set. As shown in FIG. 3, an area code to be dialed through a specified telephone company is stored on a telephone company-by-telephone company basis. A code indicative of an end of setting of the specified telephone company is then set therein. Moreover, a code indicative of an end of setting of all of the telephone companies is set therein.

### (Second Exemplary Embodiment)

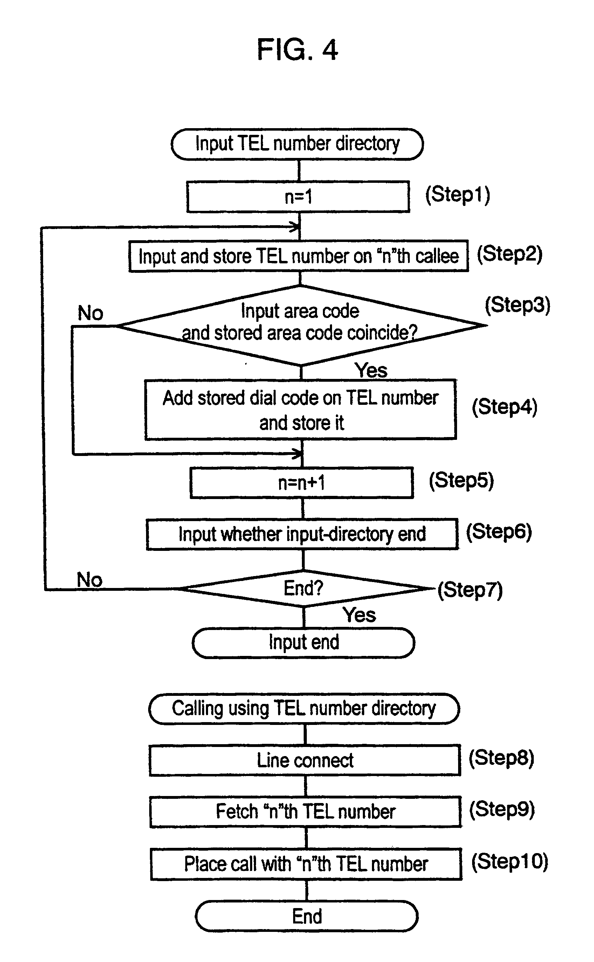

Another telephone apparatus using the automatic route selecting method in accordance with the first exemplary embodiment of the present invention is explained next with a flow chart of FIG. 4.

A registration of a telephone number of a callee for an automatic dialing-transmitting function (hereinafter referred to as "telephone directory function") is explained first.
Step 1: "1" is placed in an "n" indicative of the registered position in a telephone directory.
Step 2: A callee's telephone number to be an "n"th number in the telephone directory is input from key operating unit 4 and stored in memory unit 5.
Step 3: Control unit 6 judges whether an area code of the telephone number input coincides with one of the area codes stored in memory unit 5.
Step 4: When control unit 6 judges that there is a coincidence, it prefixes the dial code of the corresponding telephone company stored in memory unit 5 to the input telephone number and stores the telephone number prefixed with the dial code as the nth number again in memory unit 5.
Step 5: The "n" indicative of the registered position in the telephone directory and "1" are added together to become an "n".
Step 6: A key-in determining whether to end or continue the registration in the telephone directory is performed from key operating unit 4.
Step 7: Control unit 6 judges whether the registration in the telephone directory is brought to an end.

In the case where the key-in for continuing the inputting in the telephone directory is performed, the procedure is performed again from step 2.

In the case where the key-in for ending the inputting is performed, the registration in the telephone directory is terminated. When it is judged in step 3 that there is no coincidence, the procedure is performed from step 5.

Dialing-transmission utilizing the telephone directory is explained next.
Step 8: When a line connection command is input from key operating unit 4, LCU 2 connects with telephone line 1.
Step 9: A command for calling an "n"th telephone number in the telephone directory is keyed in from key operating unit 4.
Step 10: The "n"th telephone number in the telephone directory is read out from memory unit 5 and then transmitted from dial signal transmitting unit 3 to telephone line 1.

It should be noted that in the automatic route setting in accordance with the first and second exemplary embodiments for setting a telephone company and an area code, instead of specifying the number of all digits of the area code, for example, a method of inputting only first one digit or first two digits of the area code can also be applied. The reason is as follows.

The area code generally has a hierarchic structure, and its number is set based on the hierarchic structure. For instance, each area in a certain region has a part of the area code different from each other such that XX of 09XX varies depending upon the areas in the region. Accordingly, the area code can be determined by only specifying its first two digits. Even if only first one digit is specified, there are cases where areas covered by a telephone company can be specified. Although the hierarchic structure of the area code varies depending upon countries, there are cases in every country where an area to be called through a telephone company can be specified without a need to specify the number of all digits of the area code.

As explained hereinbefore, according to the present invention, the telephone company providing the least expensive telephone rate which is determined on a callee's area-by-area basis is previously set. The user can thus place a call through the telephone company having the inexpensive telephone rate without inputting the dial code of the telephone company.

Moreover, the dial code of the telephone company providing the least expensive telephone rate which is determined on a callee's area-by-area basis is prefixed to telephone number of a callee during registration in the telephone directory. In this way, when placing a call, a prompt dialing can be made without a need to decide a telephone company on an area code-by-area code basis.

The automatic route selecting method and the automatic dialing-transmitting method have been mainly explained in the above; however, a telephone apparatus executing these methods can also be attained with the structure shown in FIG. 1.

## Claims

1. A route setting method for use with a telephone apparatus provided with an automatic dialing transmitting function for prefixing a dial code of a telephone company to a first telephone number stored in a memory unit (5) which is input one digit by one digit from a key operating unit (4);
**characterized in that** the route setting method of the telephone apparatus comprises the steps of:
(a) storing the dial code of the telephone company which is input from the key operating unit by a user, in an automatic route setting table in the memory unit (5),
(b) storing an area code to be called through the telephone company which is input from the key operating unit by the user, in an automatic route setting table in the memory unit (5),
(c) judging whether a key-in indicative of an end of inputting of the area codes is performed from the key operating unit, wherein the procedure returns to step (b) when it is judged that the inputting of area codes is not completed.

2. The route setting method of claim 1, further comprising the steps of:
(d) judging whether said first telephone number includes the area code stored in said step (b);
(e) prefixing said dial code to said first telephone number to have a second telephone number when said first telephone number includes said area code stored in said step (b);
(f) replacing said first telephone number by said second telephone number to store said second telephone number, and
(g) calling said telephone number stored in said step (f) when placing a call.

3. The route setting method of claim 2, wherein a procedure of storing said first telephone number and a procedure from said step (c) to said step (f) is repeated as many times as an integer n and callee's telephone numbers are stored as the nth number in the memory unit (5).

4. A telephone apparatus comprising a key operating unit (4) and a memory unit (5), provided with an automatic dialing-transmitting function for prefxing a dial code of a telephone company to a first telephone number stored in a memory unit (5) which is input one digit by one digit from a key operating unit;
**characterized in that**
the memory unit (5) includes the automatic route setting table for storing the dial code of the telephone company which is input from the key operating unit (4) by a user and for storing an area code to be called through the telephone company which is input from the key operating unit (4) by the user; and
said telephone apparatus includes a control unit (6) for judging whether a key-in indicative of an end of inputting of the area codes is performed from the key operating unit,
wherein when it is judged that the inputting of area codes is not completed, a further area code to be called through the telephone company is input from the key operating unit.

5. The telephone apparatus of claim 4, wherein said control unit (6) is operable to prefix the dial code to the first telephone number to have a second telephone number, when the control unit determines that the first telephone number includes the area code stored in the automatic route setting table, and said control unit is operable to place a call by using the telephone number.

6. The telephone apparatus of claim 5, wherein said first telephone numbers or said second telephone numbers are stored in said memory unit (5).

## Patentansprüche

1. Leitweg-Einstellverfahren zum Einsatz mit einer Telefonvorrichtung, die mit einer automatischen Wählübermittlungsfunktion zum Vorstellen einer Wahlziffer einer Telefongesellschaft vor eine erste Telefonnummer versehen ist, die in einer Speichereinheit (5) gespeichert ist und über eine Tastenbedieneinheit (4) Ziffer für Ziffer eingegeben wird;
**dadurch gekennzeichnet, dass** das Leitweg-Einstellverfahren der Telefonvorrichtung die folgenden Schritte umfasst:
a) Speichern der Wahlziffer der Telefongesellschaft, die über die Tastenbedieneinheit von einem Benutzer eingegeben wird, in einer automatischen Leitweg-Einstelltabelle in der Speichereinheit (5),
b) Speichern einer Vorwahl, die über die Telefongesellschaft zu wählen ist und von dem Benutzer über die Tastenbedieneinheit eingegeben wird, in einer automatischen Leitweg-Einstelltabelle in der Speichereinheit (5),
c) Feststellen, ob eine Tasteneingabe, die ein Ende der Eingabe der Vorwahlen anzeigt, über die Tastenbedieneinheit durchgeführt wird, wobei der Vorgang zu Schritt b) zurückkehrt, wenn festgestellt wird, dass die Eingabe von Vorwahlen nicht abgeschlossen ist.

2. Leitweg-Einstellverfahren nach Anspruch 1, das des Weiteren die folgenden Schritte umfasst:
d) Feststellen, ob die erste Telefonnummer die in dem Schritt b) gespeicherte Vorwahl enthält;
e) Vorstellen der Wahlziffer vor die erste Telefonnummer, so dass sich eine zweite Telefonnummer ergibt, wenn die erste Telefonnummer die in Schritt b) gespeicherte Vorwahl enthält;
f) Ersetzen der ersten Telefonnummer durch die zweite Telefonnummer, um die zweite Telefonnummer zu speichern, und
g) Rufen der in Schritt f) gespeicherten Telefonnummer, wenn ein Ruf getätigt wird.

3. Leitweg-Einstellverfahren nach Anspruch 2, wobei ein Vorgang des Speicherns der ersten Telefonnummer und ein Vorgang von dem Schritt c) bis zu dem Schritt f) so oft wie eine ganze Zahl n wiederholt wird und die Telefonnummern von Anrufempfängern als die n-te Nummer in der Speichereinheit (5) gespeichert werden.

4. Telefonvorrichtung, die eine Tastenbedieneinheit (4) und eine Speichereinheit (5) umfasst, die mit einer automatischen Wählübermittlungsfunktion zum Vorstellen einer Wahlziffer einer Telefongesellschaft vor eine erste Telefonnummer versehen ist, die in einer Speichereinheit (5) gespeichert ist und über eine Tastenbedieneinheit die Ziffer für Ziffer eingegeben wird;
**dadurch gekennzeichnet, dass**:
die Speichereinheit (5) die automatische Leitweg-Einstelltabelle zum Speichern der Wahlziffer der Telefongesellschaft, die über die Tastenbedieneinheit (4) von einem Benutzer eingegeben wird, und zum Speichern einer Vorwahl enthält, die über die Telefongesellschaft zu wählen ist und von dem Benutzer über die Tastenbedieneinheit eingegeben wird;
die Telefonvorrichtung eine Steuereinheit (6) enthält, die feststellt, ob eine Tasteneingabe, die ein Ende der Eingabe der Vorwahlen anzeigt, über die Tastenbedieneinheit durchgeführt wird,
wobei, wenn festgestellt wird, dass die Eingabe von Vorwahlen nicht abgeschlossen ist, eine weitere Vorwahl, die über die Telefongesellschaft zu wählen ist, über die Tastenbedieneinheit eingegeben wird.

5. Telefonvorrichtung nach Anspruch 4, wobei die Steuereinheit (6) so betätigt werden kann, dass sie die Wahlziffer vor die erste Telefonnummer stellt, so dass sich eine zweite Telefonnummer ergibt, wenn die Steuereinheit feststellt, dass die erste Telefonnummer die in der automatischen Leitweg-Einstelltabelle gespeicherte Vorwahl enthält, und die Steuereinheit so betrieben werden kann, dass sie einen Ruf unter Verwendung der Telefonnummer tätigt.

6. Telefonvorrichtung nach Anspruch 5, wobei die ersten Telefonnummern oder die zweiten Telefonnummern in der Speichereinheit (5) gespeichert sind.

## Revendications

1. Procédé de routage pour une utilisation avec un appareil téléphonique fourni avec une fonction de transmission d'appel automatique pour préfixer un code d'appel d'une compagnie de téléphone vers un premier numéro de téléphone stocké dans une unité de mémoire (5) qui est entré un numéro après l'autre depuis une unité opérationnelle de saisie (4) ;
**caractérisé en ce que** le procédé de routage de l'appareil téléphonique comprend les étapes de :
(a) stockage du code d'appel de la compagnie de téléphone qui est entré depuis l'unité opérationnelle de saisie par un utilisateur, dans un tableau de commande automatique de route dans l'unité de mémoire (5),
(b) stockage d'un code de zone à appeler à travers la compagnie de téléphone qui est entré depuis l'unité opérationnelle de saisie par l'utilisateur, dans un tableau de commande automatique de route dans l'unité de mémoire (5) ,
(c) juger si une introduction qui indique une fin d'entrée des codes de zone est réalisée depuis l'unité opérationnelle de saisie, dans laquelle la procédure retourne à l'étape (b) lorsqu'il est jugé que l'entrée des codes de zone n'est pas réalisée.

2. Procédé de routage selon la revendication 1, comprenant en outre les étapes de :
(d) juger si ledit premier numéro de téléphone comporte le code de zone stocké dans ladite étape (b) ;
(e) préfixage dudit code d'appel vers ledit premier numéro de téléphone pour avoir un deuxième numéro de téléphone quand ledit premier numéro de téléphone comporte ledit code de zone stocké dans ladite étape (b) ;
(f) replacement dudit premier numéro de téléphone au moyen dudit deuxième numéro de téléphone pour stocker ledit deuxième numéro de téléphone, et
(g) appel dudit numéro de téléphone stocké dans l'étape (f) lorsqu'on place un appel.

3. Procédé de routage selon la revendication 2, dans lequel on répète une procédure de stockage dudit premier numéro de téléphone et une procédure depuis ladite étape (c) jusqu'à l'étape (f) autant de fois qu'un entier n et que les numéros de téléphone des appelés sont stockés en tant que nième numéro dans l'unité de mémoire (5).

4. Appareil téléphonique comprenant une unité opérationnelle de saisie (4) et une unité de mémoire (5), muni d'une fonction de transmission automatique d'appel pour préfixer un code d'appel d'une compagnie de téléphone vers un premier numéro de téléphone stocké dans une unité de mémoire (5) qui est entré un numéro après l'autre depuis une unité opérationnelle de saisie ;
**caractérisé en ce que**
l'unité de mémoire (5) comporte le tableau de commande automatique de route pour stocker le code d'appel de la compagnie de téléphone qui est entré depuis l'unité opérationnelle de saisie (4) par un utilisateur et pour stocker un code de zone à appeler via la compagnie de téléphone qui est entré depuis l'unité opérationnelle de saisie (4) par l'utilisateur, et
ledit appareil téléphonique comprend une unité de commande (6) pour juger si une introduction indiquant une fin d'entrée des codes de zone est réalisée depuis l'unité opérationnelle de saisie,
dans lequel lorsqu'on juge que l'entrée des codes de zone n'est pas réalisée, on entre un autre code de zone à appeler via la compagnie de téléphone depuis l'unité opérationnelle de saisie.

5. Appareil téléphonique selon la revendication 4, dans lequel on peut faire fonctionner ladite unité de commande (6) pour préfixer le code d'appel au premier numéro de téléphone pour avoir un deuxième numéro de téléphone, lorsque l'unité de commande détermine que le premier numéro de téléphone comporte le code de zone stocké dans le tableau de commande automatique de route, et on peut faire fonctionner ladite unité de commande pour placer un appel en utilisant le numéro de téléphone.

6. Appareil téléphonique selon la revendication 5, dans lequel lesdits premiers numéros de téléphone ou lesdits deuxièmes numéros de téléphone sont stockés dans ladite unité de mémoire (5).
